(19) Europäisches Patentamt
European Patent Office
Office européen des brevets

(11) **EP 4 601 206 A1**

(12) **DEMANDE DE BREVET EUROPEEN**

(43) Date de publication:
**13.08.2025 Bulletin 2025/33**

(21) Numéro de dépôt: **25153523.3**

(22) Date de dépôt: **23.01.2025**

(51) Classification Internationale des Brevets (IPC):
*H04B 7/04* (2017.01)       *H01Q 15/14* (2006.01)
*H04B 7/145* (2006.01)     *H04W 16/00* (2009.01)
*H04B 7/155* (2006.01)     *H01Q 3/44* (2006.01)

(52) Classification Coopérative des Brevets (CPC):
**H04B 7/04013; H04B 7/155;** H01Q 3/44;
H01Q 15/148

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **08.02.2024 FR 2401239**

(71) Demandeur: **Orange**
**92130 Issy-les-Moulineaux (FR)**

(72) Inventeurs:
• **HUSSEIN, Youssef**
**92326 CHATILLLON CEDEX (FR)**
• **CLESSIENNE, Thierry**
**92326 CHATILLON CEDEX (FR)**

(74) Mandataire: **Cabinet Beau de Loménie**
**103, rue de Grenelle**
**75340 Paris Cedex 07 (FR)**

(54) **PROCÉDÉ DE POSITIONNEMENT D'UN ENSEMBLE DE SURFACES INTELLIGENTES RECONFIGURABLES ET DISPOSITIF ÉLECTRONIQUE ASSOCIÉ**

(57) L'invention concerne un procédé de positionnement d'un ensemble E de surfaces intelligentes reconfigurables associées à un point d'accès (21) d'un réseau de télécommunications. L'ensemble comprend au moins une surface intelligente reconfigurable dite "surface intermédiaire et au moins une autre surface intelligente reconfigurable dite "surface principale". Le procédé comprend notamment une détermination (S100) de données de positionnement des surfaces intermédiaire et principale de sorte que des signaux émis par le point d'accès (21) sont réfléchis par la surface intermédiaire ($20\_j = 1..3$) vers la surface principale ($20\_i$) pour échanger des données avec au moins un terminal utilisateur (23) situé dans la zone géographique desservie par la surface principale, mais également de sorte qu'un gain de parcours d'un chemin emprunté par lesdits signaux entre le point d'accès (21) et ce terminal utilisateur (23) est supérieur à un seuil prédéterminé ou maximisé.

[Fig. 3]

**Description**

Domaine Technique

La présente invention appartient au domaine général des systèmes de communication sans fil. Elle concerne plus particulièrement un procédé de positionnement d'un ensemble de surfaces intelligentes reconfigurables. Elle concerne également un dispositif électronique configuré pour mettre en oeuvre un tel procédé.

Technique antérieure

De façon connue en soi, une surface intelligente reconfigurable, ci-après "RIS" (acronyme de l'expression anglo-saxonne "Reconfigurable Intelligent Surface") à des fins de concision, peut être définie comme un relais configuré pour recevoir un signal incident d'un émetteur et le réfléchir dans une direction spécifique. Elle est généralement considérée comme un relais de type "full duplex", c'est-à-dire qui permet une communication simultanée en liaison montante et en liaison descendante.

À cet effet, une RIS comprend un grand nombre d'éléments réfléchissants passifs à faible coût, nommés par la suite "éléments de réflexion" et dont les propriétés de réflexion respectives peuvent être modifiées afin d'améliorer les performances d'un réseau de télécommunications. En particulier, les signaux réfléchis par la RIS peuvent être combinés de manière constructive pour améliorer le niveau de puissance du signal reçu par un récepteur. En déployant des RISs dans un réseau et en configurant intelligemment leurs réflexions, les canaux de propagation sans fil entre l'émetteur et le récepteur peuvent alors être configurés dynamiquement afin d'obtenir les distributions et les gains souhaités. Cette configuration des canaux de propagation permet d'améliorer l'efficacité spectrale et la couverture du réseau, mais également de répondre au problème d'interférences et d'atténuation des signaux dans un réseau sans fil.

Le document suivant décrit plus en détail le fonctionnement d'une RIS : "Smart Radio Environments Empowered by Reconfigurable Intelligent Surfaces: How it Works, State of Research, and Road Ahead", M. D. Renzo, A. Zappone, M. Debbah, M. Alouini, C. Yuen, J. D. Rosny, and S. Tretyakov, IEEE Journal on Selected Areas in Communications, pages 2450-2524, 2020.

En pratique, une telle RIS est prévue pour réfléchir des signaux radioélectriques incidents de manière passive, c'est-à-dire sans amplification desdits signaux radioélectriques incidents par des amplificateurs (ni par des amplificateurs faible bruit, ni par des amplificateurs de puissance). En modifiant les propriétés de réflexion de chaque élément de réflexion de la RIS, typiquement en modifiant individuellement le déphasage introduit par chacun de ces éléments de réflexion, il est possible d'influencer la façon dont les signaux radioélectriques incidents sont réfléchis par la RIS et, in fine, d'influencer le canal de propagation emprunté par ces signaux radioélectriques.

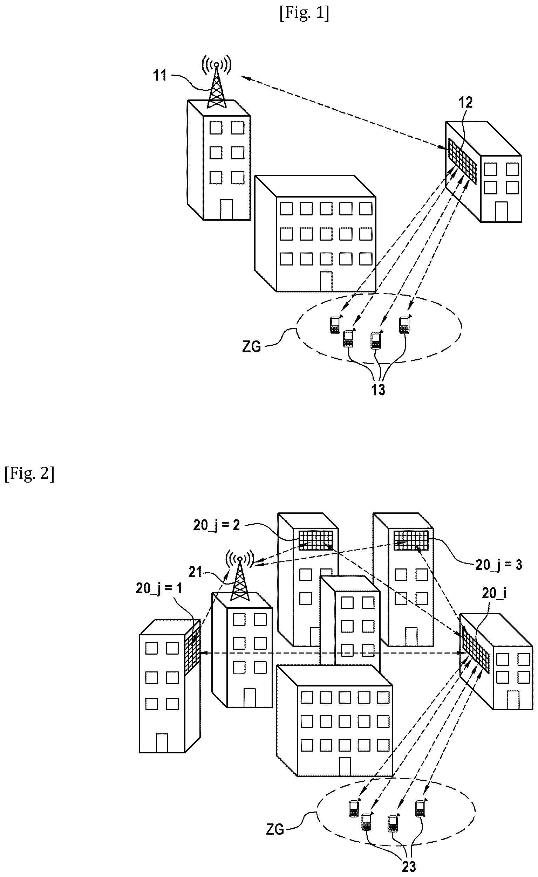

Pour cette raison, une RIS constitue un moyen efficace pour permettre des échanges de données entre un point d'accès à un réseau tel qu'une station de base, et des zones géographiques qui sinon resteraient mal (ou pas du tout) desservies. Cet aspect est par exemple illustré par la figure 1 qui représente schématiquement un exemple de système de communication sans fil utilisant une RIS 12.

Tel qu'illustré par la figure 1, le système de communication sans fil comporte une station de base 11 installée au sommet d'un immeuble, qui doit échanger des données (sur un lien descendant et/ou un lien montant) avec des terminaux utilisateurs 13 situés dans une zone géographique ZG à desservir. Dans cet exemple, les chemins directs entre la station de base 11 et la zone géographique ZG à desservir sont obstrués par des bâtiments, de sorte que les signaux radioélectriques empruntant ces chemins directs sont fortement atténués, voire bloqués.

En plaçant la RIS 12 sur un immeuble adjacent, il est possible d'introduire une réflexion supplémentaire des signaux radioélectriques incidents par la RIS placée sur cet immeuble adjacent, et de créer ainsi un chemin indirect entre la zone géographique ZG et la station de base 11, par l'intermédiaire de la RIS 12. À cet effet, un dispositif de gestion (non représenté sur la figure 1, et par exemple intégré à la station de base 11), détermine des déphasages appropriés des éléments de réflexion de la RIS 12 pour permettre à cette dernière de desservir la zone géographique ZG. Une fois déterminés, ces déphasages sont transmis à la RIS 12 via un réseau d'amenée ("backhaul network" selon la terminologie anglo-saxonne). Un module de commande de la RIS 12 permet alors de contrôler les éléments de réflexion pour que ces derniers introduisent des déphasages correspondant à ceux déterminés par le dispositif de gestion.

Les avantages liés à l'utilisation d'une RIS ne se limitent pas à la possibilité de desservir des zones qui sinon resteraient mal (ou pas du tout) desservies. En effet, la consommation énergétique d'une RIS est négligeable par rapport à celle d'une station de base. En outre, une RIS est plus simple à installer d'un point de vue technique et règlementaire. Tous ces aspects justifient le grand intérêt porté à cette technologie ainsi que la volonté des opérateurs d'accélérer son développement, notamment dans le cadre du déploiement de systèmes de communication sans fil de type 5G-Advanced ou 6G, particulièrement adaptés au contexte de multiplexage spatial de différents terminaux utilisateurs ("multi-user multiple input multiple output", MU-MIMO selon la terminologie anglo-saxonne).

Il n'en reste pas moins que l'utilisation de la seule RIS 12 pour créer un chemin indirect entre la station de base 11 et la zone géographique ZG peut ne pas suffire pour permettre à une pluralité de terminaux d'être desservis avec une qualité de service suffisante.

En effet, la station de base 11 est équipée typiquement d'un réseau d'antennes comportant une pluralité d'antennes, et le nombre maximal de terminaux utilisateurs pouvant être multiplexés spatialement, lorsque les canaux de propagation sont suffisamment décorrélés entre eux, correspond au minimum entre le nombre d'antennes du réseau d'antennes de la station de base 11 et le nombre d'éléments de réflexion de la RIS 12.

En pratique, le nombre de terminaux utilisateurs 13 pouvant effectivement être multiplexés spatialement dépend du rang de la matrice du canal de propagation entre les différents terminaux utilisateurs 13 et les différentes antennes du réseau d'antennes de la station de base 11. Toutefois, dans le cas du système de communication sans fil de la figure 1 dans lequel une RIS 12 est utilisée pour étendre la couverture d'un service dans des cas de propagation très dégradée, ce rang ne peut pas être supérieur au rang de la matrice du canal de propagation entre les différentes antennes du réseau d'antennes de la station de base 11 et les différents éléments de réflexion de la RIS 12. Or cette matrice du canal de propagation entre la station de base 11 et la RIS 12 peut présenter en pratique un rang assez faible, en particulier dans le cas de fréquences supérieures à 30 GigaHertz (GHz) (par exemple pour des ondes millimétriques), voire supérieures à 1 TéraHertz (THz), et/ou dans le cas où la RIS 12 se trouve en situation de visibilité directe ("line of sight", LOS, selon la terminologie anglo-saxonne) avec la station de base 11. De façon connue, la qualité de transmission entre un émetteur et un récepteur est améliorée lorsqu'ils sont en situation de visibilité directe. Ainsi, dans un tel cas, le canal de propagation entre la station de base 11 et la RIS 12 agit comme un goulot d'étranglement qui peut fortement limiter les performances atteignables en termes de gain de multiplexage spatial.

Pour remédier à ces inconvénients, il a été proposé de positionner une pluralité de RISs entre une station de base et une zone géographique à desservir dans laquelle sont susceptibles de se trouver des terminaux utilisateurs. Plus particulièrement, ladite pluralité de RISs comporte une RIS dite "principale" et une pluralité de RISs dites "intermédiaires" :

**[0014]** - la RIS principale étant agencée entre les RISs intermédiaires et la zone géographique à desservir,

**[0015]** - les RISs intermédiaires étant agencées entre la station de base et la RISs principale.

Par "RIS principale agencée entre les RISs intermédiaires et la zone géographique à desservir", on entend que, dans le sens descendant (resp. dans le sens montant), des signaux radioélectriques provenant de chaque RIS intermédiaire (resp. provenant de la zone géographique) atteignent la zone géographique (resp. chaque RIS intermédiaire) via réflexion sur ladite RIS principale. De manière analogue, par "RIS intermédiaire agencée entre la station de base et la RIS principale", on entend que, dans le sens descendant (resp. dans le sens montant), des signaux radioélectriques provenant de la station de base (resp. provenant de la RIS principale) atteignent la RIS principale (resp. la station de base) via réflexion sur une RIS intermédiaire.

Il résulte notamment de ces considérations qu'une RIS principale est agencée plus près de la zone géographique à desservir que les RISs intermédiaires. Une telle configuration dans laquelle est utilisée une pluralité de RISs est par exemple illustrée en figure 2.

Dans la figure 2, et selon des considérations similaires à celles décrites ci-avant pour la figure 1, le système de communication sans fil comporte une station de base 21 qui doit échanger des données avec des terminaux utilisateurs situés dans une zone géographique ZG à desservir. Le système de communication sans fil comporte en outre une pluralité de RISs, à savoir une RIS principale $20\_i$ et trois RISs intermédiaires 20_1, 20_2 et 20_3 (ci-après notées sous la forme $20\_j = 1..3$).

Tel qu'illustré par la figure 2, certains au moins des signaux radioélectriques provenant de la station de base 21 peuvent atteindre la zone géographique ZG en étant préalablement réfléchis par les RISs intermédiaires $20\_j = 1..3$, puis par la RIS principale $20\_i$, et inversement, selon le sens montant ou descendant considéré.

L'introduction des RISs intermédiaires $20\_j = 1..3$ permet d'augmenter le rang de la matrice du canal de propagation entre la station de base 21 et la RIS principale 20_i, en augmentant le nombre de chemins indirects exploitables entre ladite station de base 21 et ladite RIS principale $20\_i$, chaque RIS intermédiaire $20\_j = 1..3$ permettant d'introduire un chemin de propagation indirect distinct entre ladite station de base 21 et ladite RIS principale $20\_i$.

Dans l'état de la technique, chaque RIS intermédiaire $20\_j = 1..3$ est configurée pour réfléchir des signaux vers la RIS principale $20\_i$ sur la base d'hypothèses très générales relatives aux positions respectives desdites RIS intermédiaires $20\_j = 1..3$ et principale $20\_i$.

Exposé de l'invention

La présente invention propose une solution de positionnement de RISs qui permet d'améliorer la qualité de service offerte à des utilisateurs situés dans une zone géographique desservie par un point d'accès d'un réseau, tel qu'une station de base ou une borne Wifi.

À cet effet, selon un premier aspect, l'invention concerne un procédé de positionnement d'un ensemble E de surfaces intelligentes reconfigurables associées à un point d'accès d'un réseau de télécommunications, au moins une surface intelligente reconfigurable de l'ensemble E, dite "surface intermédiaire", étant positionnée entre le point d'accès et au moins une autre surface intelligente reconfigurable de l'ensemble E, dite "surface principale", configurée pour desservir une zone géographique donnée, le procédé étant mis en oeuvre par un dispositif électronique et comprenant :

- une détermination de données de positionnement des surfaces intermédiaire et principale de sorte que :

  - des signaux émis par le point d'accès sont réfléchis par la surface intermédiaire vers la surface principale pour échanger des données avec au moins un terminal utilisateur situé dans la zone géographique desservie par la surface principale,
  - un gain de parcours d'un chemin emprunté par lesdits signaux entre le point d'accès et ledit au moins un terminal utilisateur est supérieur à un seuil prédéterminé ou maximisé, ledit gain de parcours étant une fonction paramétrée par des distances entre le point d'accès, la surface intermédiaire et/ou la surface principale, et/ou par des angles desdits signaux en provenance du point d'accès et réfléchis par la surface intermédiaire vers la surface principale ; et

- un traitement desdites données de positionnement, de sorte à positionner lesdites surfaces intermédiaire et principale conformément auxdites données de positionnement.

De façon connue en soi, "la perte de propagation" ("path loss" selon la terminologie anglo-saxonne) correspond à l'affaiblissement que subit la puissance d'une onde électromagnétique lorsqu'elle parcourt une certaine distance. Cet affaiblissement est dû à la dispersion de la puissance, mais également aux obstacles rencontrés par l'onde sur le chemin (e.g., les bâtiments, la météo, l'effet Doppler, etc.). Le "gain de parcours" ("path gain" selon la terminologie anglo-saxonne) est défini comme l'inverse de la perte de propagation, et s'exprime généralement sous la forme d'un rapport entre une puissance moyenne de réception et une puissance moyenne d'émission, pour des antennes d'émission/réception omnidirectionnelles et co-polarisées.

Le fait de déterminer le positionnement des RISs de cette manière permet de s'assurer que les RISs sont positionnées de sorte que la perte de propagation d'un chemin entre le point d'accès et un terminal utilisateur est minimisé, ou autrement dit, de sorte que le gain de parcours du chemin est maximisé.

Par "traitement des données de positionnement", on entend par exemple la transmission, à destination des modules de commande des différentes RIS, d'une instruction visant à adapter les orientations des éléments de réflexion des différentes RIS conformément aux données de positionnement déterminés. Le traitement peut également comprendre un affichage d'une représentation 2D ou 3D de l'environnement dans lequel les RISs doivent être positionnées, et des RISs conformément aux données de positionnement déterminées, de sorte à permettre à un opérateur de positionner lesdites RIS dans l'environnement.

Le premier aspect de l'invention concerne le cas d'une liaison descendante, au cours de laquelle le signal est émis par un point d'accès et destiné à un terminal utilisateur. Un deuxième aspect de l'invention concerne le cas d'une liaison montante, au cours de laquelle le signal est émis par un terminal utilisateur à destination d'un point d'accès.

De façon plus précise et selon un deuxième aspect, l'invention concerne un procédé de positionnement d'un ensemble E de surfaces intelligentes reconfigurables associées à un point d'accès d'un réseau de télécommunications, au moins une surface intelligente reconfigurable de l'ensemble E, dite "surface intermédiaire", étant positionnée entre le point d'accès et au moins une autre surface intelligente reconfigurable de l'ensemble E, dite "surface principale", configurée pour desservir une zone géographique donnée, le procédé étant mis en oeuvre par un dispositif électronique et comprenant :

- une détermination de données de positionnement des surfaces intermédiaire et principale de sorte que :

  - des signaux émis par au moins un terminal utilisateur situé dans la zone géographique desservie par la surface principale sont réfléchis par la surface principale vers la surface intermédiaire pour échanger des données avec le point d'accès,
  - un gain de parcours d'un chemin emprunté par lesdits signaux entre ledit au moins un terminal utilisateur et le point d'accès est supérieur à un seuil prédéterminé ou maximisé, ledit gain de parcours étant une fonction paramétrée par des distances entre le point d'accès, la surface intermédiaire et/ou la surface principale, et/ou par des angles desdits signaux en provenance de la surface principale et réfléchis par la surface intermédiaire vers le point d'accès ; et

- un traitement desdites données de positionnement, de sorte à positionner lesdites surfaces intermédiaire et principale conformément auxdites données de positionnement.

De manière générale, on considère que les étapes d'un procédé ne doivent pas être interprétées comme étant liées à une notion de succession temporelle.

Dans des modes particuliers de mise en oeuvre, le procédé de positionnement selon le premier et/ou le deuxième aspect peut comporter en outre l'une ou plusieurs des caractéristiques suivantes, prises isolément ou selon toutes les combinaisons techniquement possibles.

Dans des modes particuliers de mise en oeuvre, les données de positionnement incluent une distance entre le point d'accès et la surface intermédiaire, une distance entre le point d'accès et la surface principale, et/ou entre la surface intermédiaire et la surface principale.

Dans des modes particuliers de mise en oeuvre, les données de positionnement incluent une orientation de la surface intermédiaire et/ou une orientation de la surface principale.

Dans des modes particuliers de mise en oeuvre, ladite détermination de données de positionnement est mise en oeuvre en considérant que chacune des surfaces du sous-ensemble est une "surface intermédiaire" (e.g., au cours d'une première période de temps), et en considérant également que chacune des surfaces du sous-ensemble est une "surface principale" (e.g., au cours d'une deuxième période de temps distincte de la première période de temps), chacune desdites surfaces étant associée à une zone géographique donnée lorsqu'elle est une "surface principale", chacune desdites surfaces étant configurée pour réfléchir un signal incident vers la surface principale lorsqu'elle est une "surface intermédiaire".

Ces dispositions permettent avantageusement de considérer différents rôles respectifs (intermédiaire, principale) joués par chacune des surfaces de l'ensemble E au cours de différentes périodes de temps, et à fortiori d'améliorer la qualité de service offerte à des utilisateurs situés dans différentes zones géographiques associées à un même point d'accès.

Les termes "première période de temps" et "deuxième période de temps" sont utilisés par convention arbitraire pour permettre de distinguer différentes périodes de temps, mais sans chronologie particulière entre ces périodes de temps.

Dans des modes particuliers de mise en oeuvre, la détermination est par ailleurs mise en oeuvre de sorte que la distance entre le point d'accès et la surface intermédiaire et/ou la distance entre le point d'accès et la surface principale et/ou la distance entre la surface principale et la surface intermédiaire est bornée.

Cette caractéristique est avantageuse en ce qu'elle permet de tenir compte de contraintes spatiales relatives au positionnement de ces surfaces. En effet, des contraintes règlementaires et/ou contractuelles peuvent par exemple imposer à un gestionnaire de RISs - et pouvant correspondre à un opérateur de télécommunications - une zone restreinte dans laquelle les RISs peuvent être déployées.

Dans des modes particuliers de mise en oeuvre, la détermination est par ailleurs mise en oeuvre de sorte qu'au moins une composante de l'angle entre le point d'accès et la surface principale, et/ou l'angle entre le point d'accès et la surface intermédiaire, et/ou l'angle entre la surface principale et la surface intermédiaire est bornée.

De manière similaire à la précédente caractéristique, cette caractéristique est avantageuse en ce qu'elle permet de tenir compte de contraintes spatiales relatives au positionnement de ces surfaces.

Dans des modes particuliers de mise en oeuvre, le gain de parcours du chemin entre le point d'accès et ledit au moins un terminal utilisateur correspond à la combinaison d'un gain d'antenne issu de la réflexion, par la surface intermédiaire, de signaux (incidents) émis par le point d'accès vers la surface principale, d'un gain de parcours d'un chemin emprunté par lesdits signaux entre le point d'accès et la surface intermédiaire, et d'un gain de parcours d'un chemin emprunté par lesdits signaux entre la surface intermédiaire et la surface principale, et dans lequel le gain d'antenne est une fonction paramétrée par des angles d'incidence et de réflexion des signaux, le gain de parcours du chemin entre le point d'accès et la surface intermédiaire est une fonction paramétrée par une distance entre le point d'accès et la surface intermédiaire, et le gain de parcours du chemin entre la surface intermédiaire et la surface principale est une fonction paramétrée par une distance entre la surface intermédiaire et la surface principale.

Le fait de déterminer le gain de parcours de cette manière dans le cas d'une liaison descendante permet de tenir compte de la réalité physique précise dans laquelle se trouve ladite surface intermédiaire.

Cette réalité physique fait non seulement référence aux distances entre les surfaces et la station de base, mais également aux angles "d'incidence" des signaux atteignant la surface intermédiaire depuis le point d'accès, et aux angles "de départ" de signaux atteignant ladite au moins une surface principale depuis la surface intermédiaire.

Dans des modes particuliers de mise en oeuvre, la détermination de données de positionnement est mise en oeuvre par application d'un algorithme de descente de gradient par contrainte.

Dans des modes particuliers de mise en oeuvre, l'application de l'algorithme de descente de gradient par contrainte fournit un premier optimum local, et la détermination de données de positionnement comprend en outre, suite à l'application de l'algorithme de descente de gradient par contrainte :

- une application d'un algorithme itératif de recherche locale (e.g., recherche tabou) ayant comme paramètre le premier optimum local, de sorte à obtenir au moins un deuxième optimum local ; et
- une sélection d'un optimum local parmi lesdits premier et au moins un deuxième optimums locaux, l'optimum local sélectionné correspondant aux données de positionnement déterminées.

Dans des modes particuliers de mise en oeuvre, le point d'accès est en situation de visibilité directe avec tout ou partie de la surface intermédiaire, et/ou la surface principale est en situation de visibilité directe avec tout ou partie de la zone géographique associée qu'elle dessert, et/ou tout ou partie de la surface principale est en situation de visibilité directe avec tout ou partie de la surface intermédiaire.

Dans des modes particuliers de mise en oeuvre, une pluralité de surfaces intermédiaires sont à positionner entre le point d'accès et la surface principale, et la détermination de données de positionnement est mise en oeuvre de sorte que les surfaces intermédiaires sont agencées suivant des directions respectives différentes par rapport au point d'accès.

Dans des modes particuliers de mise en oeuvre, le procédé est mis en oeuvre pour positionner une pluralité de surfaces intermédiaires entre le point d'accès et la surface principale, et la détermination de données de positionnement est mise en oeuvre de sorte que les surfaces intermédiaires sont agencées suivant des directions respectives différentes par rapport à la surface principale.

Selon un troisième aspect, l'invention concerne un dispositif électronique de gestion configuré pour mettre en oeuvre le procédé de positionnement d'un ensemble E de surfaces intelligentes reconfigurables selon l'invention.

Selon un quatrième aspect, l'invention concerne un système de communication sans fil comportant un point d'accès, une pluralité de surfaces intelligentes reconfigurables associées audit point d'accès, ainsi qu'un dispositif électronique de gestion selon l'invention.

Selon un cinquième aspect, l'invention concerne un programme d'ordinateur comportant des instructions pour la mise en oeuvre d'un procédé de positionnement selon l'invention, lorsque ledit programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un sixième aspect, l'invention concerne un support d'enregistrement lisible par un ordinateur sur lequel est enregistré le programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1, déjà décrite, représente schématiquement un exemple de système de communication sans fil selon l'état de la technique, dans lequel une unique RIS est utilisée pour desservir une zone géographique donnée ;

[Fig. 2] la figure 2, déjà décrite, représente schématiquement un exemple de système de communication sans fil selon l'état de la technique, dans lequel une pluralité de RISs intermédiaires et une RIS principale sont utilisées pour desservir une zone géographique donnée ;

[Fig. 3] la figure 3 représente schématiquement un système de communication sans fil selon un mode particulier de réalisation de l'invention ;

[Fig. 4] La figure 4 est une représentation schématique alternative de la figure 3, dans laquelle des RISs appartenant au système de communication sans fil sont respectivement associées à des zones géographiques à desservir ;

[Fig. 5] la figure 5 représente des modules embarqués dans un dispositif de gestion, tel que le dispositif de gestion appartenant au système de la figure 3, selon un exemple de mise en oeuvre de l'invention ;

[Fig. 6] la figure 6 représente schématiquement un exemple d'architecture matérielle d'un dispositif de gestion appartenant au système de communication sans fil de la figure 3 ;

[Fig. 7] la figure 7 représente, sous forme d'ordinogramme, un mode particulier de mise en oeuvre d'un procédé de positionnement, par exemple exécuté par le dispositif électronique de la figure 5 ; et

[Fig. 8] la figure 8 est une représentation géométrique d'un système de communication sans fil selon un mode particulier de réalisation de l'invention.

Description des modes de réalisation

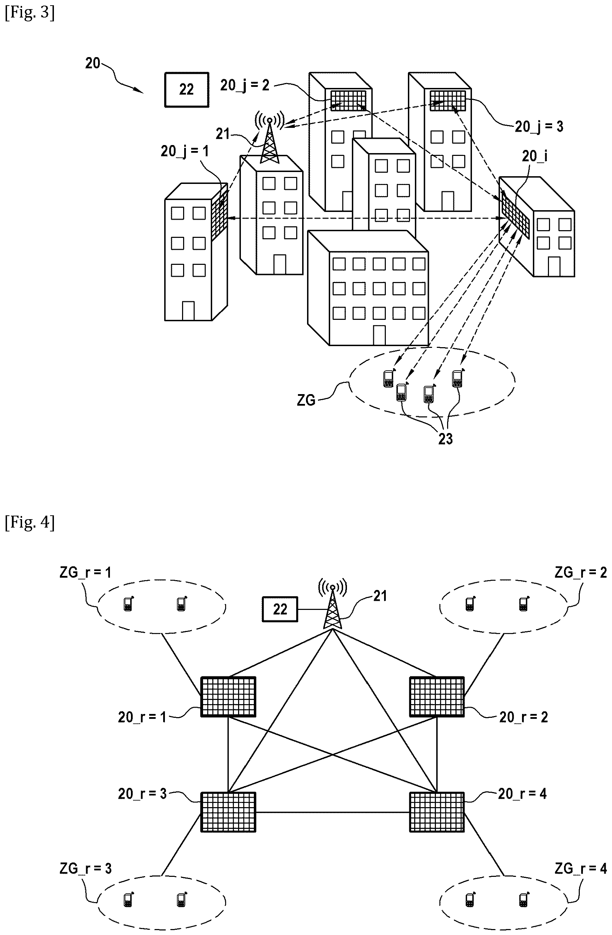

La figure 3 représente schématiquement un système de communication sans fil 20 selon un mode particulier de réalisation de l'invention.

Le système 20 se base sur la configuration déjà décrite ci-avant en référence à la figure 2. En conséquence, les éléments mentionnés en relation avec la figure 2 sont ici repris avec des références numériques identiques.

Ainsi, et tel qu'illustré par la figure 3, le système 20 comporte un point d'accès prenant la forme d'une station de base 21, une RIS principale 20_$i$ configurée pour desservir une zone géographique donnée ZG de ladite cellule de communication, ainsi que des RISs intermédiaires 20_$j$ = 1..3. La pluralité de RISs appartenant au système 20 forment un ensemble de RISs noté ci-après "ensemble E".

L'indice entier i est utilisé ici pour désigner la ou les RISs principales de l'ensemble E, et l'indice entier j, compris entre 1 et 3, désigne les RISs intermédiaires de l'ensemble E.

Comme mentionné auparavant, chaque RIS intermédiaire 20_$j$ = 1..3 permet donc d'établir un chemin indirect distinct entre la station de base 21 et la zone géographique ZG, la RIS principale 20_$i$ se trouvant sur une pluralité de tels chemins indirects distincts établis par les différentes RISs intermédiaires 20_$j$ = 1..3.

Il convient de noter que le fait de considérer trois RISs intermédiaires 20_$j$ = 1..3 ne constitue qu'une variante d'implémentation de l'invention. D'une manière générale, aucune limitation n'est attachée au nombre de RISs intermédiaires pouvant être envisagé, par exemple plus ou moins de trois RISs intermédiaires, notamment une seule RIS intermédiaire.

Par ailleurs, et bien qu'une seule RIS principale 20_$i$ soit envisagée dans le présent mode de réalisation, l'invention couvre encore d'autres modes de réalisation dans lesquels plusieurs RISs principales peuvent être envisagées. Par exemple, le nombre de RISs principales peut être inférieur ou égal au nombre de RISs intermédiaires, limitant ainsi le nombre de canaux de propagation entre les RISs principales et les terminaux utilisateurs à desservir.

Suivant des considérations similaires, le système 20 peut également comporter une pluralité de stations de base, et chaque station de base peut desservir une ou plusieurs cellules de communication. En pratique, les principes décrits ci-après peuvent être étendus par la personne du métier à de telles configurations.

La station de base 21 comporte un réseau d'antennes (non représenté sur les figures) comportant un nombre entier $M > 1$ d'antennes. Le réseau d'antennes est par exemple un réseau linéaire uniforme ("Uniform Linear Array", ULA, selon la terminologie anglo-saxonne) dans lequel les M antennes sont agencées avec un écartement constant suivant une dimension, ou bien un réseau rectangulaire planaire uniforme ("Uniform Rectangular Planar Array", URPA, selon la terminologie anglo-saxonne) dans lequel les M antennes sont coplanaires et agencées suivant deux dimensions avec des écartements respectifs constants.

Par ailleurs, on considère de manière nullement limitative que chaque terminal utilisateur est équipé, dans l'exemple envisagé ici, d'une seule antenne. L'invention n'est bien entendu pas limitée au cas où chaque terminal utilisateur est équipé d'une unique antenne. Ainsi, rien n'exclut d'envisager qu'un ou plusieurs terminaux utilisateurs situés dans la zone géographique ZG soient équipés de plusieurs d'antennes.

Un terminal utilisateur peut par exemple prendre la forme d'un téléphone mobile, tel qu'un téléphone mobile intelligent (encore dit "smartphone" en anglais), une tablette numérique, un ordinateur portable, un assistant personnel, une montre connectée, une liseuse électronique, etc. D'une manière générale, aucune limitation n'est attachée à la forme prise par un terminal utilisateur.

En outre, chaque RIS comporte un module de commande (non représenté sur les figures) et des éléments de réflexion (non représentés sur les figures) dont des propriétés de réflexion sont modifiables par le module de commande de sorte à influencer la façon dont des signaux radioélectriques incidents sur lesdits éléments de réflexion sont réfléchis par ceux-ci.

Le rang de la matrice du canal de propagation entre la station de base 21 et la RIS principale 20_$i$ peut être amélioré si les RISs intermédiaires 20_$j$ = 1..3 sont distribuées spatialement par rapport à la station de base 21 et/ou par rapport à la RIS principale 20_$i$, c'est-à-dire si lesdites RISs intermédiaires 20_$j$ = 1..3 sont agencées dans des directions respectives différentes par rapport à :

**[0070]** - la station de base 21, c'est-à-dire si l'angle mesuré au niveau de la station de base 21 entre les directions de deux RISs intermédiaires (e.g., 20_$j$ = 1 et 20_$j$ = 2) est non nul (par exemple supérieur à 5° ou supérieur à 10°) pour chaque paire de RISs intermédiaires ; et/ou

**[0071]** - la RIS principale 20_*i*, c'est-à-dire si l'angle mesuré au niveau de la RIS principale 20_*i* entre les directions de deux RISs intermédiaires (e.g., 20_j=1 et 20_j=2) est non nul (par exemple supérieur à 5° ou supérieur à 10°) pour chaque paire de RISs intermédiaires.

Il est à noter que la direction d'une RIS intermédiaire 20_*j* par rapport à la station de base 21 (resp. par rapport à une RIS principale 20_*i*) correspond à la direction suivant laquelle des signaux radioélectriques émis par la station de base 21 (resp. réfléchis par la RIS intermédiaire 20_*j*) arrivent au niveau de ladite RIS intermédiaire 20_*j* (resp. partent de la RIS intermédiaire 20_*j*) pour être réfléchis vers la RIS principale 20_*i*. En d'autres termes, il s'agit de la direction du vecteur reliant la station de base 21 (resp. la RIS intermédiaire 20_*j*) à la RIS intermédiaire 20_*j* (resp. à la RIS principale 20_*i*) en situation de visibilité directe (LOS). Ce vecteur peut notamment être caractérisé de manière angulaire au moyen de différentes composantes (élévation, azimut, et éventuellement polarisation).

Il convient toutefois de noter que, dans le cas où il n'existe pas de chemin direct entre la station de base 21 (resp. la RIS intermédiaire 20_*j*) et la RIS intermédiaire 20_*j* (resp. la RIS principale 20_*i*), la direction entre ces deux entités se définit alors à partir du chemin indirect principal (c'est-à-dire le plus énergétique) les reliant.

De préférence, en particulier dans le cas où les échanges de données avec les terminaux utilisateurs utilisent des fréquences élevées (par exemple supérieures à 30 GHz, voire supérieures à 1 THz) :

- la station de base 21 est en situation de visibilité directe (LOS) avec tout ou partie des RISs intermédiaires 20_*j*, et/ou

- la RIS principale 20_*i* est en situation de visibilité directe (LOS) avec tout ou partie de la zone géographique ZG à desservir, et/ou

- la RIS principale 20_*i* est en situation de visibilité directe (LOS) avec tout ou partie des RISs intermédiaires 20_*j*.

Comme exposé plus en détail ci-après, des positions optimales des différentes RISs sont déterminées, par exemple en résolvant un problème d'optimisation. À cet égard, dans le cadre de la présente invention, il est considéré que les RISs de l'ensemble E sont mobiles - c'est-à-dire que leur position et/ou orientation peuvent varier. Ces changements de position et/ou d'orientation sont par exemple réalisés manuellement par un opérateur, ou en utilisant des moyens permettant aux RIS de changer de position et/ou d'orientation. Par "changement de position", on entend un déplacement des RIS dans un plan défini par le sol et/ou un changement de leur hauteur. Leurs positions respectives résultent d'une telle procédure consistant à rechercher des emplacements appropriés, tout en veillant à maximiser un gain de parcours d'un chemin emprunté par les signaux entre la station de base 21 et les terminaux utilisateurs 23 (ou du moins à s'assurer que ce gain est supérieur à une valeur seuil pouvant être prédéterminée ou pas).

Comme indiqué ci-avant, le système de communication sans fil 20 comporte également un dispositif électronique de gestion 22 configuré pour déterminer des données de positionnement des RISs d'un ensemble E de RIS, en mettant en oeuvre un procédé de positionnement selon l'invention.

Tel qu'illustré en figure 3, le dispositif de gestion 22 est un dispositif électronique distinct des RISs de l'ensemble E ainsi que de la station de base 21. Dans des modes particuliers de mise en oeuvre, le dispositif de gestion est un terminal qui prend par exemple la forme d'un téléphone mobile, tel qu'un téléphone mobile intelligent (encore dit "smartphone" en anglais), une tablette numérique, un ordinateur portable, ou un assistant personnel. En variante, ce dispositif de gestion 22 est par exemple intégré à la station de base 21.

La figure 4 est une représentation schématique alternative de la figure 3, dans laquelle des RISs appartenant au système de communication sans fil sont respectivement associées à des zones géographiques à desservir.

Tel qu'illustré en figure 4, les zones géographiques *ZG_r* = 1..4 respectivement associées aux RIS 20_*r* = 1..4 de l'ensemble E sont distinctes entre elles. Par ailleurs, les RISs 20_*r* = 1..4 de l'ensemble E sont reliées entre elles dans la figure 4 par des traits symbolisant des chemins indirects (distincts) entre la station de base 21 et les différentes zones géographiques *ZG_r* = 1..4 selon que telle ou telle RIS joue un rôle de RIS intermédiaire ou bien de RIS principale.

De façon plus précise, dans la mesure où chaque RIS de l'ensemble E est susceptible de jouer un rôle de RIS principale, chacune desdites RIS est associée à une zone géographique donnée ZG (par exemple d'une cellule) couverte par la station de base 21 et se destine à desservir cette dernière lorsque le rôle de RIS principale lui est effectivement attribué. Les zones géographiques ZG respectivement associées aux RIS de l'ensemble E peuvent être disjointes ou se chevaucher. En outre, chaque RIS dont le rôle est déterminé comme étant celui d'une RIS intermédiaire est alors associée à au moins une RIS dont le rôle est déterminé comme étant celui d'une RIS principale, en vue de réfléchir vers celle-ci des signaux incidents provenant de la station de base 21 dans le cas d'une liaison descendante.

Pour pouvoir mettre en oeuvre cette configuration dans laquelle plusieurs zones géographiques sont couvertes, les rôles respectivement joués par les RISs déployées (i.e. un rôle de RIS intermédiaire ou bien un rôle de RIS principale) sont modifiés au cours du temps, par exemple en veillant à optimiser un critère de performance de communication pour des antennes situées dans la zone géographique desservie par chaque surface dont le rôle est déterminé comme étant celui de surface principale.

Ce critère de performance de communication est par exemple représentatif d'au moins un parmi :

- un débit des données pouvant être échangées entre la station de base et les antennes situées dans la zone géographique desservie par chaque surface principale ;

- un niveau de qualité de service des échanges de données entre la station de base et les antennes situées dans la zone géographique desservie par chaque surface principale ;

- une efficacité énergétique des échanges de données entre la station de base et les antennes situées dans la zone géographique desservie par chaque surface principale ; et

- un rapport signal sur bruit des échanges de données entre la station de base et les antennes situées dans la zone géographique desservie par chaque surface principale.

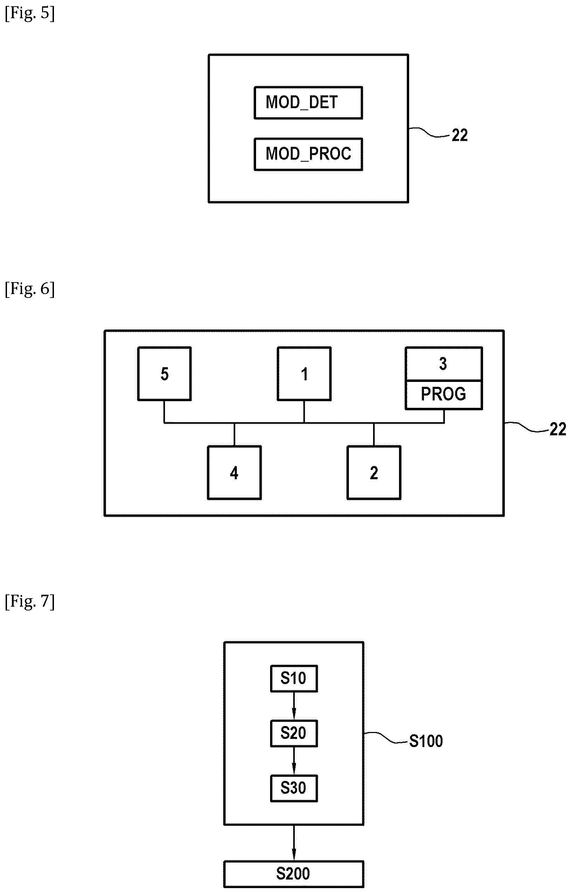

La figure 5 représente des modules embarqués dans un dispositif de gestion, tel que le dispositif de gestion 22 appartenant au système 20 de la figure 3, selon un exemple de mise en oeuvre de l'invention.

Tel qu'illustré par la figure 5, le dispositif de gestion 22 comprend notamment un module MOD_DET de détermination de données de positionnement des surfaces intermédiaire et principale, et un module MOD_PROC de traitement desdites données de positionnement, dont les fonctionnalités sont décrites plus en détail en référence aux figures 6 et 7.

La figure 6 représente schématiquement un exemple d'architecture matérielle du dispositif de gestion 22 appartenant au système 20 de la figure 3.

Tel qu'illustré par la figure 6, le dispositif de gestion 22 dispose de l'architecture matérielle d'un ordinateur. Ainsi, le dispositif de gestion 22 comporte, notamment, un processeur 1, une mémoire vive 2, une mémoire morte 3 et une mémoire non volatile 4. Il dispose en outre de moyens de communication 5.

La mémoire morte 3 du dispositif de gestion 22 constitue un support d'enregistrement conforme à l'invention, lisible par le processeur 1 et sur lequel est enregistré un programme d'ordinateur PROG conforme à l'invention, comportant des instructions pour l'exécution d'étapes du procédé de positionnement. Le programme PROG définit des modules fonctionnels du dispositif de gestion 22, qui s'appuient ou commandent les éléments matériels 1 à 5 du dispositif de gestion 22 cités précédemment. Ces modules fonctionnels sont illustrés sur la figure 5 à titre nullement limitatif, et sont décrits plus en détails ci-après en référence à différents modes de mise en oeuvre.

Dans des modes particuliers de mis en oeuvre, les moyens de communication 5 permettent notamment au dispositif de gestion 22 d'échanger des données avec tout équipement du système de communication sans fil 20, dont notamment les RISs intermédiaires 20_$j$ et la RIS principale 20_$i$ de l'ensemble E via un réseau de télécommunications. À cet effet, les moyens de communication 5 comportent une interface de communication, filaire ou non filaire, apte à mettre en oeuvre tout protocole adapté connu de l'homme du métier.

La figure 7 représente, sous forme d'ordinogramme, un mode particulier de mise en oeuvre du procédé de positionnement exécuté par le dispositif de gestion 22.

Dans le présent mode de mise en oeuvre, le procédé de positionnement comporte une première étape S100 de détermination de données de positionnement des surfaces intermédiaire et principale de sorte que des signaux émis par la station de base 21 sont réfléchis par la surface intermédiaire 20_$j$ vers la surface principale 20_$i$ pour échanger des données avec des antennes 23 situées dans la zone géographique desservie par la surface principale.

Par ailleurs, lesdites données de positionnement sont déterminées de sorte que le gain de parcours $PG_{21 \rightarrow 20\_j \rightarrow 20\_i}$ d'un chemin emprunté par lesdits signaux entre la station de base 21 et les antennes 23 est supérieur à un seuil prédéterminé ou maximisé.

Pour ce faire, le gain de parcours est considéré comme étant une fonction paramétrée par des distances entre la station de base, la surface intermédiaire et/ou la surface principale, et/ou par des angles des signaux réfléchis par la surface intermédiaire vers la surface principale.

En définitive, la détermination des données de positionnement peut s'effectuer en résolvant un problème d'optimisation permettant de déterminer les positions optimales de déploiement ou d'installation des RISs de l'ensemble E. Ces positions optimales incluent par exemple les distances entre les RISs de cet ensemble E et la station de base 21, les distances entre les RISs elles-mêmes, l'orientation des RISs de cet ensemble E par rapport à la station de base 21, et/ou l'orientation des RISs de cet ensemble E entre elles. Cette étape S100 est par exemple mise en oeuvre par le module MOD_DET du dispositif de gestion 22.

Les orientations sont par exemple formalisées sous la forme de "vecteur des angles d'incidence" et de "vecteur des angles d'arrivée" décrits plus en détail ci-après.

Pour la suite de la description du procédé de positionnement, on introduit les notations qui suivent.

$\Psi_{a,21\to20\_j}$ (également noté $\Psi_a$) désigne un vecteur, dit "vecteur des angles d'incidence", correspondant à la direction d'une onde incidente provenant de la station de base 21 et dirigée vers une RIS intermédiaire 20_j. Ce vecteur comporte trois composantes $\theta_{a,21\to20\_j}$, $\Phi_{a,21\to20\_j}$, $\omega_{a,21\to20\_j}$ correspondant respectivement à l'élévation, l'azimut et la polarisation associés à ladite direction.

$\Psi_{d,20\_j\to20\_i}$ (également noté $\Psi_d$) désigne un vecteur, dit "vecteur des angles de départ", correspondant à la direction d'une onde réfléchie par une RIS intermédiaire 20_j vers la RIS principale 20_i . Ce vecteur comporte deux composantes $\theta_{d,20\_j\to20\_i}$, $\phi_{d,20\_j\to20\_i}$ correspondant respectivement à l'élévation et l'azimut associés à ladite direction.

$d_{a\to b}$ désigne une distance entre les entités a et b, chacune de ces entités correspondant soit à une station de base, soit à une RIS.

x et z correspondent à des directions représentatives des directions principales dans lesquelles s'étend une RIS intermédiaire 20_j, la direction notée y étant celle orthogonale au plan formé par les directions x et z. Ainsi, les axes portant les directions x et z forment un repère attaché à la RIS intermédiaire 20_j.

$$B_x\left(\psi_{a,21\to20\_j}\right) = \sin\theta_{a,21\to20\_j}\cos\phi_{a,21\to20\_j}$$

$$B_y\left(\psi_{a,21\to20\_j}\right) = \sin\theta_{a,21\to20\_j}\sin\phi_{a,21\to20\_j}$$

$$B_z\left(\psi_{a,21\to20\_j}\right) = \cos\theta_{a,21\to20\_j}$$

$$B_x\left(\psi_{d,20\_j\to20\_i}\right) = \sin\theta_{d,20\_j\to20\_i}\cos\phi_{d,20\_j\to20\_i}$$

$$B_y\left(\psi_{d,20\_j\to20\_i}\right) = \sin\theta_{d,20\_j\to20\_i}\sin\phi_{d,20\_j\to20\_i}$$

$$B_z\left(\psi_{d,20\_j\to20\_i}\right) = \cos\theta_{d,20\_j\to20\_i}$$

$$B_p = B_p\left(\psi_{a,21\to20\_j}\right) + B_p\left(\psi_{d,20\_j\to20\_i}\right), \forall p \in \{x,y,z\}$$

$$B_{x,z} = \cos\omega_{a,21\to20\_j}\, B_x\left(\psi_{a,21\to20\_j}\right) + \sin\omega_{a,21\to20\_j}\, B_z\left(\psi_{a,21\to20\_j}\right)$$

$Q_{20\_j}$ désigne une matrice diagonale représentative des déphasages appliqués à chacun des $N_{20\_j}$ éléments de réflexion d'une RIS intermédiaire 20_j, et peut être exprimée sous la forme suivante :

$$Q_{20\_j} = diag\left(\overline{g_{20\_j}(\Psi_a,\Psi_d)}e^{i\varphi_{20\_j,1}}, \cdots, \overline{g_{20\_j}(\Psi_a,\Psi_d)}e^{i\varphi_{20\_j,N_{20\_j}}}\right)$$

expression dans laquelle :

- i est le nombre complexe qui élevé au carré est égal à -1,
- $\varphi_{20\_j,k}$ correspond au déphasage introduit par l'élément de réflexion d'indice k de la RIS intermédiaire 20_j (k = 1, ..., $N_{20\_j}$),

$$-\ \overline{g_{20\_j}(\Psi_a,\Psi_d)} = \frac{\sqrt{4\pi}}{\lambda}\,g_{20\_j}(\Psi_a,\Psi_d),$$

où λ correspond à la longueur d'onde,

$$- g_{20\_j}(\Psi_a, \Psi_d) = \frac{i\sqrt{4\pi} \times \tau \times L_{20\_j}^2}{\lambda} \widetilde{g_{20\_j}}(\Psi_a, \Psi_d) sinc\left(\frac{\pi L_{20\_j} B_x}{\lambda}\right) sinc\left(\frac{\pi L_{20\_j} B_z}{\lambda}\right),$$

où sinc correspond à la fonction sinus cardinal, et $\tau$ correspond à un coefficient de réflexion de chaque élément de réflexion de la RIS intermédiaire 20_j (ce coefficient $\tau$ est compris entre 0 et 1, et est supposé constant pour tous les éléments de réflexion dans le présent mode de mise en oeuvre).

- $\widetilde{g_{20\_j}}(\Psi_a, \Psi_d)$ est égal à la quantité suivante :

$$\frac{B_y}{\sqrt{B_{x,z}^2 + B_y^2}} \left\| \begin{matrix} \cos\theta_{20\_j\to20\_i} \left(\cos\omega_{21\to20\_j} \sin\phi_{20\_j\to20\_i} - \sin\omega_{21\to20\_j} \cos\phi_{20\_j\to20\_i}\right) \\ \sin\omega_{21\to20\_j} \sin\theta_{21\to20\_j} + \cos\omega_{21\to20\_j} \cos\phi_{21\to20\_j} \end{matrix} \right\|_2$$

où $\|.\|_2$ désigne la norme euclidienne.

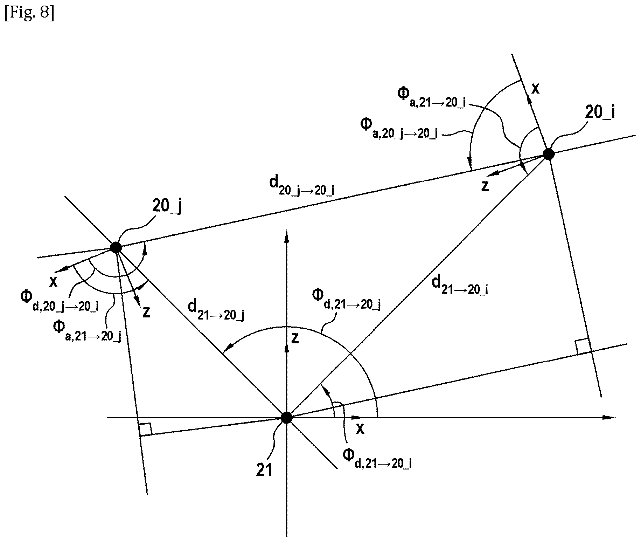

Par souci de simplicité, ce problème d'optimisation peut s'exprimer en deux dimensions, lorsque la station de base 21 et les RISs de l'ensemble E sont toutes à une même hauteur. Dans ce cas, ce problème d'optimisation revient à déterminer les distances et les azimuts des RIS, toutes les élévations ayant alors pour valeur 90°. Bien entendu, ce cas particulier ne limite en rien la portée de l'invention. Ces aspects sont notamment représentés de manière schématique et à titre d'exemple uniquement en figure 8.

Selon un premier mode de réalisation, le problème d'optimisation précédemment évoqué vise à déterminer les positions optimales d'installation des RISs de l'ensemble E, de sorte que le gain de parcours $PG_{21\to20\_j\to20\_i}$ d'un chemin emprunté par lesdits signaux entre la station de base 21 et les antennes 23 via les RISs intermédiaire et principale est maximisé. Autrement dit, ce premier mode de réalisation vise à déterminer les positions optimales d'installation des RISs de l'ensemble E, de sorte que l'énergie du signal incident en provenance de la station de base 21 et réfléchi par la surface intermédiaire 20_j vers la surface principale 20_i est maximisée.

Le problème d'optimisation consiste alors à déterminer les variables d'optimisation telles que :

$$\max_{d_{21\to20\_i}, d_{20\_i\to20\_j}, \phi_{a,21\to20\_j}, \phi_{d,21\to20\_j}, \phi_{a,20\_i\to20\_j}, \phi_{d,20\_i\to20\_j}, \nu, \forall i, j, i \neq j,} \nu$$

tel que

$$PG_{21\to20\_j\to20\_i} > \nu \quad, \forall i, j, i \neq j \qquad\qquad\qquad (C0\_DL)$$

$d_{20\_i\to20\_j}^2 = d_{21\to20\_i}^2 + d_{21\to20\_j}^2 - 2d_{21\to20\_i}d_{21\to20\_j}\cos\left(\phi_{d,21\to20\_j} - \right.$

$$\left. \phi_{d,21\to20\_i}\right), \forall i, j, i \neq j \qquad\qquad\qquad (C1)$$

$d_{21\to20\_i}^2 = d_{20\_i\to20\_j}^2 + d_{21\to20\_j}^2 - 2d_{21\to20\_j}d_{20\_i\to20\_j}\cos\left(\phi_{d,20\_j\to20\_i} - \right.$

$$\left. \phi_{a,21\to20\_j}\right), \forall i, j, i \neq j \qquad\qquad\qquad (C2)$$

$d_{21\to20\_j}^2 = d_{20\_i\to20\_j}^2 + d_{21\to20\_i}^2 - 2d_{20\_i\to20\_j}d_{21\to20\_i}\cos\left(\phi_{a,21\to20\_i} - \right.$

$$\left. \phi_{a,20\_j\to20\_i}\right), \forall i, j, i \neq j \qquad\qquad\qquad (C3)$$

$$d_{20\_i\to20\_j} = d_{20\_j\to20\_i}, \forall i, j, i \neq j \qquad\qquad\qquad (C4)$$

$$\phi_{d,20\_j\to20\_i} = \phi_{a,20\_i\to20\_j}, \forall i, j, i \neq j \qquad\qquad\qquad (C5)$$

Les contraintes C1 à C3 correspondent à des contraintes géométriques de calcul de distances dans un plan. Il importe à ce stade de rappeler que les distances et angles référencés dans des contraintes sont notamment représentés de manière schématique en figure 8.

La contrainte C4 exprime la notion intuitive de symétrie d'une distance, et est avantageuse en ce qu'elle permet de simplifier les expressions, et ainsi de faciliter la résolution de ce problème d'optimisation.

Enfin, la contrainte C5 exprime le fait que l'azimut d'une onde réfléchie par la RIS 20_*j* et dirigée vers la RIS 20_*i* est égal à l'azimut d'une onde incidente provenant de la RIS 20_*i* et dirigée vers la RIS 20_*j*.

L'angle $\phi_{a,20\_i\rightarrow20\_j}$ n'a pas de sens physique dans le cas où l'onde est émise par la station de base 21, puis réfléchie par la RIS 20_*j* (jouant le rôle de RIS intermédiaire) vers la RIS 20_*i* (jouant le rôle de RIS principale).

Cependant, selon une implémentation particulière, les rôles respectifs (e.g., "intermédiaire", "principale") joués par les RISs de l'ensemble E peuvent être modifiés. Chaque RIS dont le rôle est déterminé comme étant celui d'une RIS intermédiaire est alors associée à au moins une RIS dont le rôle est déterminé comme étant celui d'une RIS principale, en vue de réfléchir vers celle-ci des signaux incidents provenant de la station de base 21. Par ailleurs, dans la mesure où chaque RIS de l'ensemble E est susceptible de jouer un rôle de RIS principale, chacune desdites RIS est associée à une zone géographique donnée ZG de la cellule couverte par la station de base 21 et se destine à desservir cette dernière lorsque le rôle de RIS principale lui est effectivement attribué. Les zones géographiques ZG respectivement associées aux RIS de l'ensemble E sont distinctes entre elles. Ces aspects sont notamment représentés de manière schématique et à titre d'exemple uniquement en figure 8.

Selon cette implémentation particulière, cet angle $\phi_{a,20\_i\rightarrow20\_j}$ prend donc tout son sens lorsque l'onde est réfléchie par la RIS 20_*i* (qui joue alors le rôle de RIS intermédiaire) vers la RIS 20_*j* (et qui joue alors par exemple le rôle de RIS principale).

Selon une autre implémentation particulière évoqué plus en détail ci-après, la transmission de données considérée n'est pas uniquement une communication en liaison descendante, mais une communication de type "full duplex", et cet angle $\phi_{a,20\_i\rightarrow20\_j}$ prend donc également tout son sens dans le cas d'une liaison montante, i.e., lorsque l'onde est réfléchie par la RIS 20_*i* vers la RIS 20_*j* en vue d'atteindre la station de base 21.

Selon un deuxième mode de réalisation, le problème d'optimisation précédemment évoqué vise à déterminer les positions optimales d'installation des RISs de l'ensemble E, de sorte que le gain de parcours $PG_{21\rightarrow20\_j\rightarrow20\_i}$ d'un chemin emprunté par lesdits signaux entre la station de base 21 et les antennes 23 via les RISs intermédiaire(s) et principale est supérieur à une valeur seuil *v*, cette valeur seuil étant déterminée préalablement à la résolution de ce problème d'optimisation . Autrement dit, ce deuxième mode de réalisation vise à déterminer les positions optimales d'installation des RISs de l'ensemble E, de sorte que l'énergie du signal incident en provenance de la station de base 21 et réfléchi par la ou les surface intermédiaire(s) 20_*j* vers la surface principale 20_*i* est supérieure à une valeur seuil.

Le problème d'optimisation à résoudre consiste à trouver $d_{21\rightarrow20\_i}$, $d_{20\_i\rightarrow20\_j}$, $\phi_{a,21\rightarrow20\_j}$, $\phi_{d,21\rightarrow20\_j}$, $\phi_{a,20\_i\rightarrow20\_j}$, $\phi_{d,20\_i\rightarrow20\_j}$, $\forall i, j, i \neq j$, de sorte que :

$$PG_{21\rightarrow20\_j\rightarrow20\_i} > v \,, \forall i, j, i \neq j,$$

avec les contraintes C1 à C5 précédemment évoquées.

Autrement dit, à la différence du premier mode de réalisation dans lequel la variable *v* était déterminée lors de la résolution de ce problème d'optimisation, cette variable *v* est cette fois déterminée préalablement à la résolution de ce problème d'optimisation.

Dans des modes particuliers de mise en oeuvre, la distance entre la station de base 21 et la surface intermédiaire 20_*j* et/ou la distance entre la station de base 21 et la surface principale 20_*i* et/ou la distance entre la surface principale 20_*i* et la surface intermédiaire 20_*j* est bornée.

Dans ce cas, le problème d'optimisation comprend des contraintes supplémentaires référencées C6 à C8 ci-après :

$$d_{21\rightarrow20\_i_{\min}} < d_{21\rightarrow20\_i} < d_{21\rightarrow20\_i_{\max}}, \forall i, \qquad (C6)$$

$$d_{20\_i\rightarrow20\_j_{\min}} < d_{20\_i\rightarrow20\_j} < d_{20\_i\rightarrow20\_j_{\max}}, \forall i, j, i \neq j, \qquad (C7)$$

$$d_{21\rightarrow20\_j_{\min}} < d_{21\rightarrow20\_j} < d_{21\rightarrow20\_j_{\max}}, \forall i, \qquad (C8)$$

Dans des modes particuliers de mise en oeuvre, les azimuts de l'angle d'incidence $\phi_{a,21\rightarrow20-i}$ d'une onde provenant de la station de base 21 et dirigée vers la RIS 20_*i*, de l'angle $\phi_{d,21\rightarrow20\_i}$ d'une onde émise par la station de base 21 vers la RIS 20_*i*, de l'angle d'incidence $\phi_{a,20\_i\rightarrow20\_j}$ d'une onde provenant de la RIS 20_*i* et dirigée vers la RIS20_*j* et de l'angle $\phi_{d,20\_i\rightarrow20\_j}$ d'une onde émise par la RIS 20_*i* vers la RIS 20_*j* sont bornés.

Dans ce cas, le problème d'optimisation comprend une contrainte supplémentaire référencée C9 ci-après :

$$\phi_{\min} < \phi_{a,21 \to 20\_i}, \phi_{d,21 \to 20\_i}, \phi_{a,20\_i \to 20\_j}, \phi_{d,20\_i \to 20\_j} < \phi_{\max} \forall i, j, i \neq j \qquad (C9)$$

Le gain de parcours $PG_{21 \to 20\_j \to 20\_i}$ d'un chemin emprunté par lesdits signaux entre la station de base 21 et les antennes 23 via la RIS intermédiaire 20_j et la RIS principale 20_i correspond à la combinaison d'un gain d'antenne ($G_{20\_j}$) issu de la réflexion, par la surface intermédiaire 20_j, de signaux incidents émis par la station de base 21 vers la surface principale 20_i, d'un gain de parcours $PG_{21 \to 20\_j}$ d'un chemin emprunté par lesdits signaux entre la station de base 21 et la surface intermédiaire 20_j, et d'un gain de parcours $PG_{20\_j \to 20\_i}$ d'un chemin emprunté par lesdits signaux entre la surface intermédiaire 20_j et la surface principale 20_i.

En outre, le gain d'antenne ($G_{20\_j}$) est une fonction paramétrée par des angles d'incidence ($\psi_{21 \to 20\_j}$) et de réflexion ($\psi_{20\_j \to 20\_i}$) des signaux. Par ailleurs, le gain de parcours ($PG_{21 \to 20\_j}$) du chemin entre la station de base (21) et la surface intermédiaire (20_j) est une fonction paramétrée par une distance ($d_{21 \to 20\_j}$) entre la station de base 21 et la surface intermédiaire 20_j, et le gain de parcours ($PG_{20\_j \to 20\_i}$) du chemin entre la surface intermédiaire 20_j et la surface principale 20_i est une fonction paramétrée par une distance ($d_{20\_j \to 20\_i}$) entre la surface intermédiaire 20_j et la surface principale 20_i.

Ainsi, le gain de parcours $PG_{21 \to 20\_j \to 20\_i}$ s'exprime comme suit :

$$PG_{21 \to 20\_j \to 20\_i} = G_{20\_j} PG_{21 \to 20\_j}\left(d_{21 \to 20\_j}\right) PG_{20\_j \to 20\_i}\left(d_{20\_j \to 20\_i}\right) \qquad (E1)$$

avec $G_{20\_j} = |g_j(\psi_{a,21 \to 20\_j}, \psi_{d,20\_j \to 20\_i})|^2$

En considérant que la RIS intermédiaire 20_j réfléchit, vers la RIS principale 20_i, des signaux incidents provenant de la station de base 21, l'expression devient alors :

$$\left|g_j\left(\Psi_{a,21 \to 20\_j}, \Psi_{d,20\_j \to 20\_i}\right)\right|^2 = N_j^2 \overline{\left|g_{20\_j}\left(\Psi_{a,21 \to 20\_J}, \Psi_{d,20\_J \to 20\_i}\right)\right|}^2$$

Par ailleurs, afin de simplifier la résolution de ce problème d'optimisation, il peut par exemple être considéré que les ondes électromagnétiques se propagent "en espace libre" entre la station de base 21 et la RIS intermédiaire 20_j, et entre la RIS intermédiaire 20_j et la RIS principale 20_i.

Dans ce cas, le gain de parcours $PG_{21 \to 20\_j(d21 \to 20\_j)}$ s'exprime comme une fonction de $\left(\dfrac{\lambda}{4\pi d_{21 \to 20\_j}}\right)^2$. Ainsi, le gain de parcours $PG_{21 \to 20\_j}(d_{21 \to 20\_j})$ est par exemple égal à $\left(\dfrac{\lambda}{4\pi d_{21 \to 20\_j}}\right)^2$.

De manière symétrique, le gain de parcours $PG_{20\_j \to 20\_i}(d_{20\_j \to 20\_i})$ est par exemple égal à $\left(\dfrac{\lambda}{4\pi d_{20\_j \to 20\_i}}\right)^2$.

Toute méthode d'optimisation connue de la personne du métier pour résoudre un tel problème peut être envisagée, le choix d'une méthode particulière ne correspondant qu'à une variante d'implémentation de l'invention.

Selon un mode particulier de mise en oeuvre, la détermination S100 de données de positionnement est mise en oeuvre par application S10 d'un algorithme de descente de gradient par contrainte comprenant les étapes suivantes :

- une obtention d'un positionnement initial des RISs principale et intermédiaire(s). Ce positionnement initial est par exemple prédéterminé, mais peut également être sélectionné de façon aléatoire ;

- à chaque itération k, une mise-à-jour d'un vecteur $x_k$ représentatif de toutes les variables d'optimisation précédemment évoquées, en utilisant le gradient de la fonction de Lagrange tel que $x_{k+1} = x_k + \alpha_k \nabla_x L(x_k, \lambda_k, \Gamma_k)$, avec $L(x_k, \lambda_k, \Gamma_k)$ la fonction de Lagrange, $\alpha_k$ la taille du pas, et $\lambda_k, \Gamma_k$ les multiplicateurs de Lagrange correspondant aux contraintes en termes d'inégalité et d'égalité à l'itération k; puis une mise à jour des multiplicateurs de Lagrange $\lambda_k, \Gamma_k$, utilisant par exemple les conditions de Karush-Kuhn-Tucker.

Les étapes de mise-à-jour sont réitérées tant qu'un critère d'arrêt n'est pas atteint. Ce critère d'arrêt correspond par exemple à un nombre prédéterminé d'itérations à atteindre ou à un critère de convergence. Selon une implémentation particulière, le critère de convergence est considéré comme étant atteint lorsque la distance entre un résultant obtenu à l'itération *k* et au moins un autre résultant obtenu à une itération précédente, par exemple à l'itération *k* - 1, est inférieure à un certain seuil. Cette distance correspond par exemple à une distance euclidienne.

Cependant, dans certains modes de mise en oeuvre, les données de positionnement obtenues par application de cet algorithme de descente de gradient par contrainte ne correspondent pas nécessairement à un extrémum ("global optimum" selon la terminologie anglo-saxonne), mais plutôt à un optimum local (nommé "premier optimum local" ci-après). En effet, la solution déterminée par un algorithme de descente de gradient est généralement fortement liée au positionnement initial.

Dans ce cas particulier, la détermination S100 de données de positionnement comprend en outre une étape S20 au cours de laquelle un algorithme itératif de recherche locale ayant comme paramètre le premier optimum local est mis en oeuvre, de sorte à obtenir un ou plusieurs deuxièmes optima locaux.

Cet algorithme de recherche locale correspond par exemple à un algorithme de recherche tabou. De façon connue, un algorithme de recherche tabou explore le voisinage d'une position donnée (ici le premier optimum local) et choisit par exemple la position dans ce voisinage qui maximise une fonction coût.

Suite à l'application de l'étape 20, un optimum local est sélectionné lors d'une étape S30 parmi lesdits premier et deuxièmes optimums locaux, et l'optimum local sélectionné correspond alors aux données de positionnement déterminées lors de cette étape S100. L'optimum local sélectionné correspond par exemple à celui générant une valeur de fonction coût la plus optimale.

Le procédé de positionnement d'un ensemble E de surfaces intelligentes reconfigurables comprend enfin une étape S200 au cours de laquelle les données de positionnement sont traitées, de sorte à positionner lesdites surfaces intermédiaire 20_*j* et principale 20_*i* conformément auxdites données de positionnement. Cette étape est par exemple mise en oeuvre par le module MOD_PROC du dispositif de gestion 22.

Selon une implémentation particulière, cette étape de traitement comprend une transmission, à destination des modules de commande des différentes RIS, d'une instruction visant à adapter les orientations des éléments de réflexion des différents RIS conformément aux données de positionnement déterminées.

Selon une autre implémentation particulière, les RISs sont mobiles et/ou sont positionnées sur des moyens permettant aux RIS de se déplacer. Dans ce cas, cette étape de traitement comprend une transmission, à destination des modules de commande des différentes RIS, d'une instruction visant à adapter les positions des différentes RIS conformément aux données de positionnement déterminées.

Selon une autre implémentation particulière, le traitement comprend un affichage d'une représentation 2D ou 3D de l'environnement dans lequel les RISs doivent être positionnées, et une superposition des RISs sur cette représentation, conformément aux données de positionnement déterminées, de sorte à permettre à un opérateur de positionner lesdites RIS dans l'environnement.

Il importe de noter que, selon encore d'autres modes de mise en oeuvre du procédé de positionnement, les positions des RISs peuvent être déterminés en combinant tout ou partie des problèmes d'optimisation précédemment décrits. Dit encore autrement, toutes les contraintes C1 à C9 précédemment citées peuvent être prises en compte selon toute combinaison techniquement opérante.

L'invention a jusqu'à présent été principalement décrite dans le cas d'une communication en liaison descendante. Mais l'invention n'en reste pas moins applicable dans le cas d'une liaison montante ou dans le cas d'une communication de type "full-duplex". Dans ce dernier cas ("full duplex"), le premier mode de réalisation précédemment évoqué comprend alors une contrainte supplémentaire C0_UL :

$$PG_{20\_i \to 20\_j \to 21} > \nu \, , \forall i, j, i \neq j \qquad\qquad (\text{C0\_UL})$$

En outre, le gain de parcours $PG_{21 \to 20\_j \to 20\_i}$ précédemment évoqué (équation E1) s'exprime alors par exemple comme suit :

$$PG_{21 \to 20\_j \to 20\_i} = G_{20_j}(\lambda_{DL}) PG_{21 \to 20\_j}\big(d_{21 \to 20\_j}, \lambda_{DL}\big) PG_{20\_j \to 20\_i}\big(d_{20\_j \to 20\_i}, \lambda_{DL}\big)$$

avec $G_{20\text{-}j}(\lambda_{DL}) = |g_j(\psi_{,a,21 \to 20\_j}, \psi_{d,20\_j \to 20\_i}, \lambda_{DL})|^2$ et $\lambda_{DL}$ la longueur d'onde descendante.

En considérant le cas en liaison descendante au cours duquel la RIS intermédiaire 20_*j* réfléchit, vers la RIS principale 20_*i*, des signaux incidents provenant de la station de base 21, l'expression devient alors :

$$\big|g_j\big(\Psi_{a,21 \to 20\_j}, \Psi_{d,20\_j \to 20\_i}, \lambda_{DL}\big)\big|^2 = N_j^2 \, \overline{\big|g_{20\_j}\big(\Psi_{a,21 \to 20\_j}, \Psi_{d,20\_j \to 20\_i}, \lambda_{DL}\big)\big|}^2$$

En outre, le gain de parcours $PG_{20\_i \to 20\_j \to 21}$ du chemin parcouru par l'onde en liaison montante s'exprime par exemple comme suit :

$$PG_{20\_i \to 20\_j \to 21} = G_{20\_j}(\lambda_{UL}) PG_{20\_i \to 20\_j}(d_{20\_i \to 20\_j}, \lambda_{UL}) PG_{20\_j \to 21}(d_{20\_j \to 21}, \lambda_{UL})$$

avec $G_{20\_j}(\lambda_{UL}) = |g_j(\psi_{a,21 \to 20\_j}, \psi_{d,20\_j \to 20\_i}, \lambda_{UL})|^2$ et $\lambda_{UL}$ la longueur d'onde montante.

En considérant le cas de la liaison montante au cours duquel la RIS principale 20_i réfléchit, vers la RIS intermédiaire 20_j, des signaux incidents provenant du terminal utilisateur 23, l'expression devient alors :

$$\left|g_j(\Psi_{a,20\_i \to 20\_j}, \Psi_{d,20\_j \to 21}, \lambda_{UL})\right|^2 = N_j^2 \overline{\left|g_{20\_j}(\Psi_{a,20\_i \to 20\_j}, \Psi_{d,20\_j \to 21}, \lambda_{UL})\right|}^2$$

L'invention a jusqu'à présent été décrite dans le cas où le système de communication sans fil ne comprend qu'une seule RIS intermédiaire 20_j. Mais l'invention n'en reste pas moins applicable dans le cas où le système comprend une pluralité de RIS intermédiaires, par exemple deux RIS intermédiaires 20_j = 1 et 20_j = 2. Dans ce cas particulier, dans le cas d'une liaison descendante, les positions sont déterminées de sorte que les signaux émis par la station de base 21 sont réfléchis par une première surface intermédiaire (par exemple 20_j = 1) vers une deuxième surface intermédiaire (par exemple 20_j = 2), puis que les signaux sont réfléchis par cette deuxième surface intermédiaire vers la surface principale 20_i pour échanger des données avec des terminaux utilisateurs 23 situées dans la zone géographique desservie par cette surface principale. En outre, les données de positionnement sont également déterminées de sorte que le gain de parcours $PG_{21 \to 20\_j=1 \to 20\_j=2 \to 20\_i}$ du chemin emprunté par lesdits signaux entre la station de base 21 et les terminaux utilisateurs 23 est supérieur à un seuil prédéterminé ou maximisé.

L'invention a également été décrite dans le cas où les RISs et la station de base sont toutes situées dans un même plan défini par le sol (deux dimensions). L'invention n'en reste pas moins applicable dans la station de base 21 et les RISs de l'ensemble E sont à des hauteurs différentes - i.e., la station de base 21 et les RISs de l'ensemble E ont des élévations variables. Dans ce cas particulier, les contraintes C2 à C4 s'expriment alors par exemple à l'aide de coordonnées sphériques, et de nouvelles contraintes relatives sont ajoutées qui visent à borner les élévations de la station de base 21 et des RIS.

Enfin, l'invention a également été décrite dans le cas où le problème d'optimisation vise à déterminer des distances relatives ainsi que des orientations relatives entre les entités du système de communication sans fil. L'invention n'en reste pas moins applicable dans le cas où seules des distances doivent être déterminées (les orientations étant alors par exemple fixes), mais également dans le cas où seules des orientations doivent être déterminées (les distances étant alors par exemple fixes).

## Revendications

1. Procédé de positionnement d'un ensemble E de surfaces intelligentes reconfigurables associées à un point d'accès (21) d'un réseau de télécommunications, au moins une surface intelligente reconfigurable (20_j = 1..3) de l'ensemble E, dite "surface intermédiaire", étant positionnée entre le point d'accès et au moins une autre surface intelligente reconfigurable (20_i) de l'ensemble E, dite "surface principale", configurée pour desservir une zone géographique (ZG) donnée, le procédé étant mis en oeuvre par un dispositif électronique (22) et comprenant :

   - une détermination (S100) de données de positionnement des surfaces intermédiaire et principale de sorte que :

      - des signaux émis par le point d'accès (21) sont réfléchis par la surface intermédiaire (20_j = 1..3) vers la surface principale (20_i) pour échanger des données avec au moins un terminal utilisateur (23) situé dans la zone géographique desservie par la surface principale,
      - un gain de parcours ($PG_{21 \to 20\_j \to 20\_i}$) d'un chemin emprunté par lesdits signaux entre le point d'accès (21) et ledit au moins un terminal utilisateur (23) est supérieur à un seuil prédéterminé ou maximisé, ledit gain de parcours étant une fonction paramétrée par des distances entre le point d'accès, la surface intermédiaire et/ou la surface principale, et/ou par des angles desdits signaux en provenance du point d'accès et réfléchis par la surface intermédiaire vers la surface principale ; et

      - un traitement (S200) desdites données de positionnement, de sorte à positionner lesdites surfaces intermédiaire (20_j = 1..3) et principale (20_i) conformément auxdites données de positionnement.

2. Procédé de positionnement d'un ensemble E de surfaces intelligentes reconfigurables (20_j = 1..3) associées à un point d'accès d'un réseau de télécommunications (21), au moins une surface intelligente reconfigurable (20_$j$ = 1..3) de l'ensemble E, dite "surface intermédiaire", étant positionnée entre le point d'accès et au moins une autre surface intelligente reconfigurable (20_$i$) de l'ensemble E, dite "surface principale", configurée pour desservir une zone géographique (ZG) donnée, le procédé étant mis en oeuvre par un dispositif électronique (22) et comprenant :

   - une détermination (S100) de données de positionnement des surfaces intermédiaire et principale de sorte que :

   - des signaux émis par au moins un terminal utilisateur (23) situé dans la zone géographique desservie par la surface principale sont réfléchis par la surface principale (20_$i$) vers la surface intermédiaire (20_$j$ = 1..3) pour échanger des données avec le point d'accès (21),
   - un gain de parcours ($PG_{20\_i \rightarrow 20\_j \rightarrow 21}$) d'un chemin emprunté par lesdits signaux entre ledit au moins un terminal utilisateur (23) et le point d'accès (21) est supérieur à un seuil prédéterminé ou maximisé, ledit gain de parcours étant une fonction paramétrée par des distances entre le point d'accès, la surface intermédiaire et/ou la surface principale, et/ou par des angles desdits signaux en provenance de la surface principale et réfléchis par la surface intermédiaire vers le point d'accès ; et

   - un traitement (S200) desdites données de positionnement, de sorte à positionner lesdites surfaces intermédiaire (20_$j$ = 1..3) et principale (20_$i$) conformément auxdites données de positionnement.

3. Procédé de positionnement selon la revendication 1 ou 2, dans lequel les données de positionnement incluent une distance entre le point d'accès et la surface intermédiaire ($d_{21 \rightarrow 20\_j}$), une distance entre le point d'accès et la surface principale ($d_{21 \rightarrow 20\_i}$), et/ou entre la surface intermédiaire et la surface principale ($d_{20\_j \rightarrow 20\_i}$).

4. Procédé de positionnement selon l'une des revendications 1 à 3, dans lequel les données de positionnement incluent une orientation de la surface intermédiaire et/ou une orientation de la surface principale.

5. Procédé de positionnement selon l'une des revendications 1 à 4, dans lequel ladite détermination de données de positionnement est mise en oeuvre en considérant que chacune des surfaces d'au moins un sous-ensemble de l'ensemble E est une "surface intermédiaire", et en considérant également que chacune des surfaces du sous-ensemble est une "surface principale", chacune desdites surfaces étant associée à une zone géographique donnée lorsqu'elle est une "surface principale", chacune desdites surfaces étant configurée pour réfléchir un signal incident vers la surface principale lorsqu'elle est une "surface intermédiaire".

6. Procédé de positionnement selon l'une des revendications 1 à 5, dans lequel la détermination (S100) est par ailleurs mise en oeuvre de sorte que la distance entre le point d'accès et la surface intermédiaire et/ou la distance entre le point d'accès et la surface principale et/ou la distance entre la surface principale et la surface intermédiaire est bornée.

7. Procédé de positionnement selon l'une des revendications 1 à 6, dans lequel la détermination (S100) est par ailleurs mise en oeuvre de sorte qu'au moins une composante de l'angle entre le point d'accès (21) et la surface principale, et/ou l'angle entre le point d'accès (21) et la surface intermédiaire, et/ou l'angle entre la surface principale et la surface intermédiaire est bornée.

8. Procédé de positionnement selon l'une des revendications 1, ou 3 à 7 en combinaison avec la revendication 1, dans lequel le gain de parcours ($PG_{21 \rightarrow 20\_j \rightarrow 20\_i}$) du chemin entre le point d'accès (21) et ledit au moins un terminal utilisateur (23) correspond à la combinaison d'un gain d'antenne ($G_{20\_j}$) issu de la réflexion, par la surface intermédiaire, de signaux émis par le point d'accès (21) vers la surface principale (20_$i$), d'un gain de parcours ($PG_{21 \rightarrow 20\_j}$) d'un chemin emprunté par lesdits signaux entre le point d'accès (21) et la surface intermédiaire (20_$j$), et d'un gain de parcours ($PG_{20-j \rightarrow 20\_i}$) d'un chemin emprunté par lesdits signaux entre la surface intermédiaire (20_$j$) et la surface principale (20_$i$),
et dans lequel le gain d'antenne ($G_{20\_j}$) est une fonction paramétrée par des angles d'incidence ($\psi_{21 \rightarrow 20\_j}$) et de réflexion ($\psi_{20\_j \rightarrow 20-i}$) des signaux, le gain de parcours ($PG_{21 \rightarrow 20\_j}$) du chemin entre le point d'accès (21) et la surface intermédiaire (20_$j$) est une fonction paramétrée par une distance ($d_{21 \rightarrow 20\_j}$) entre le point d'accès (21) et la surface intermédiaire (20_$j$), et le gain de parcours ($PG_{20\_j \rightarrow 20\_i}$) du chemin entre la surface intermédiaire (20_$j$) et la surface principale (20_$i$) est une fonction paramétrée par une distance ($d_{20\_j \rightarrow 20\_i}$) entre la surface intermédiaire (20_$j$) et la surface principale (20_$i$).

9. Procédé de positionnement selon l'une des revendications 1 à 8, dans lequel :

- le point d'accès (21) est en situation de visibilité directe avec tout ou partie de la surface intermédiaire (20_*j*), et/ou
- la surface principale (20_*i*) est en situation de visibilité directe avec tout ou partie de la zone géographique associée qu'elle dessert, et/ou
- tout ou partie de la surface principale (20_*i*) est en situation de visibilité directe avec tout ou partie de la surface intermédiaire (20_*j*).

10. Procédé selon l'une des revendications 1 à 9, dans lequel le procédé est mis en oeuvre pour positionner une pluralité de surfaces intermédiaires (20_*j* = 1..3) entre le point d'accès (21) et la surface principale (20_*i*), et la détermination (S100) de données de positionnement est mise en oeuvre de sorte que les surfaces intermédiaires (20_*j* = 1..3) sont agencées suivant des directions respectives différentes par rapport au point d'accès (21).

11. Procédé selon l'une des revendications 1 à 10, dans lequel le procédé est mis en oeuvre pour positionner une pluralité de surfaces intermédiaires (20_*j* = 1..3) entre le point d'accès (21) et la surface principale (20_i), et la détermination (S100) de données de positionnement est mise en oeuvre de sorte que les surfaces intermédiaires (20_*j* = 1..3) sont agencées suivant des directions respectives différentes par rapport à la surface principale (20_i).

12. Dispositif électronique (22) de gestion configuré pour mettre en oeuvre le procédé de positionnement d'un ensemble E de surfaces intelligentes reconfigurables selon l'une quelconque des revendications 1 à 11.

13. Système de communication sans fil (20) comportant un point d'accès (21), une pluralité de surfaces intelligentes reconfigurables associées audit point d'accès (21), ainsi qu'un dispositif électronique de gestion selon la revendication 12.

[Fig. 1]

[Fig. 2]

[Fig. 3]

[Fig. 4]

[Fig. 5]

MOD_DET

MOD_PROC

— 22

[Fig. 6]

| 5 | | 1 | | 3 |
| | | | | PROG |

| | 4 | | 2 | |

— 22

[Fig. 7]

S10

↓

S20

↓

S30

— S100

↓

S200

[Fig. 8]

| | Europäisches Patentamt |
| European Patent Office |
| Office européen des brevets |

## RAPPORT DE RECHERCHE EUROPEENNE

Numéro de la demande

EP 25 15 3523

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | QIN HAO ET AL: "Indoor mm-Wave Coverage Enhancement: Reconfigurable Intelligent Surface Deployment Strategy Based on Human Mobility Model", IEEE COMMUNICATIONS LETTERS, IEEE SERVICE CENTER, PISCATAWAY, NJ, US, vol. 26, no. 10, 25 juillet 2022 (2022-07-25), pages 2475-2479, XP011923420, ISSN: 1089-7798, DOI: 10.1109/LCOMM.2022.3193896 [extrait le 2022-07-26] | 1-4,8-13 | INV. H04B7/04 H01Q15/14 H04B7/145 H04W16/00 H04B7/155 ADD. H01Q3/44 |
| Y | * Sections II et III * | 6-8 | |
| A | | 5 | |
| | ----- | | |
| X | WO 2021/236510 A1 (GOOGLE LLC [US]) 25 novembre 2021 (2021-11-25) | 1-4,6,7, 9-13 | |
| Y | * alinéa [0100] * | 6-8 | |
| A | * alinéa [0163] - alinéa [0164] * * figure 10 * | 5 | |
| | ----- | | DOMAINES TECHNIQUES RECHERCHES (IPC) |
| | | | H04B H04W H01Q |

Le présent rapport a été établi pour toutes les revendications

| Lieu de la recherche | Date d'achèvement de la recherche | Examinateur |
|---|---|---|
| Munich | 22 mai 2025 | Toumpakaris, D |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 15 3523

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-05-2025

| Document brevet cité au rapport de recherche | Date de publication | Membre(s) de la famille de brevet(s) | Date de publication |
|---|---|---|---|
| WO 2021236510 A1 | 25-11-2021 | AU 2021277195 A1 | 10-11-2022 |
| | | CN 115443612 A | 06-12-2022 |
| | | EP 4014333 A1 | 22-06-2022 |
| | | KR 20220156599 A | 25-11-2022 |
| | | US 2023208479 A1 | 29-06-2023 |
| | | WO 2021236510 A1 | 25-11-2021 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. D. RENZO** ; **A. ZAPPONE** ; **M. DEBBAH** ; **M. ALOUINI** ; **C. YUEN** ; **J. D. ROSNY** ; **S. TRETYAKOV**. Smart Radio Environments Empowered by Reconfigurable Intelligent Surfaces: How it Works, State of Research, and Road Ahead. *IEEE Journal on Selected Areas in Communications*, 2020, 2450-2524